# EUROPÄISCHE PATENTSCHRIFT

(11) **EP 3 399 335 B1**
(45) Veröffentlichungstag und Bekanntmachung des Hinweises auf die Patenterteilung: **01.07.2020**
(21) Anmeldenummer: 18165813.9
(22) Anmeldetag: 05.04.2018
(51) Int. Cl.: G01S 17/00, G01V 8/00, G06K 7/10, G06K 7/14

(54) **KONTRASTSENSOR**
CONTRAST SENSOR
CAPTEUR DE CONTRASTE

(30) Priorität: 03.05.2017 DE 102017109469
(43) Veröffentlichungstag der Anmeldung: 07.11.2018
(73) Patentinhaber: SICK AG, 79183 Waldkirch (DE)
(72) Erfinder: Hirt, Günter, 77790 Steinach (DE); Schwarz, Simone, 79215 Elzach (DE); Bierbaum, Dr. Alexander, 79286 Glottertal (DE)

(56) Entgegenhaltungen:
- EP-A2- 0 731 416
- EP-A2- 0 892 280
- DE-A1-102008 024 104

## Beschreibung

Die vorliegende Erfindung betrifft einen Kontrastsensor nach dem Oberbegriff von Anspruch 1 und ein Verfahren nach dem Oberbegriff von Anspruch 5.

In Verpackungsprozessen von Produkten werden produktabhängige Kennzeichnungen wie beispielsweise Mindesthaltbarkeitskennungen, Loskennzeichnungen, auf die Produkte oder die Verpackungen aufgedruckt bzw. markiert.

Bisher werden solche Kennungen, beispielsweise Barcodes oder Seriennummern von Codelesern oder Kamerasystemen gelesen und verifiziert.

Liest das System die Kennung nicht mehr, wird der Produktionsprozess gestoppt, obwohl die Kennung beispielsweise für einen Verbraucher bzw. Kunden dennoch noch gut erkennbar ist.

Für einfache Verpackungsmaschinen und Drucksysteme ist es jedoch oft ausreichend, die Anwesenheit der Kennzeichnung an sich zu überprüfen. Bei diesen Systemen kann davon ausgegangen werden, dass wenn ein Druck vorhanden ist, diese auch korrekt ist. Deshalb ist es notwendig zu erkennen, ob ein Kennzeichnungssystem grundsätzlich funktioniert bzw. es ist nicht notwendig, die Kennzeichnung zu lesen.

Die EP 0 892 280 A2 offenbart ein Verfahren zum Betrieb einer optoelektronischen Sensoranordnung mit einer Lichtempfangseinheit zum Empfang von aus einem Überwachungsbereich stammendem Licht und mit einer Steuer- und Auswerteeinheit, wobei die Lichtempfangseinheit in mehrere Empfangszonen unterteilt wird, die jeweils einer Objektzone im Überwachungsbereich entsprechen.

Die DE 10 2008 024 104 A1 offenbart einen Materialmarkensensor zum Erfassen einer Markierung auf oder in einem Material, wobei der Materialmarkensensor folgende Merkmale aufweist. Einen Kamerasensor, der ausgebildet ist, um einen Flächenabschnitt des Materials zumindest zeilenförmig auf die Markierung hin abzutasten und eine mit dem Kamerasensor gekoppelte Auswertelogikeinheit, die ausgebildet ist, um bei einem Erfassen einer Markierung auf dem abgetasteten Flächenabschnitt des Materials durch den Kamerasensor ein Materialmarkenerkennungssignal auszugeben, das einer Position der Markierung auf oder in dem Material entspricht und wobei die Auswertelogikeinheit ferner ausgebildet ist, um zum Ermitteln des Materialmarkenerkennungssignals eine fest eingestellte Verknüpfung von Logik-Elementen zu verwenden.

Eine Aufgabe der Erfindung besteht darin, einen in Handhabung und Einrichtung einfachen Kontrastsensor bereitzustellen, der in der Lage ist, Kennzeichnungen zu überprüfen bzw. zu identifizieren. Beispielsweise soll erkannt werden, ob in einem bestimmten Positionsbereich eine Druckinformation, ein Datums-Code, ein Datamatrix-Code und/oder ein Strichcode vorhanden ist oder nicht. Weiter soll erkannt werden, ob eine Kennzeichnung von einer Sollqualität abweicht oder nicht. Weiter soll erkannt werden, ob eine Kennzeichnung vollständig vorhanden ist oder nicht. Der Sensor soll also bei spielsweise eine Bedruckung mit Übereinstimmungskriterien innerhalb eines vorgegebenen Toleranzbereichs wiedererkennen und dies über einen Schaltausgang signalisieren.

Die Aufgabe wird gemäß Anspruch 1 gelöst durch einen Kontrastsensor und Detektionsobjekt mit einer Kennzeichnung, wobei der Kontrastsensor zur Auswertung von den Kennzeichnungen auf den Detektionsobjekten ausgebildet ist, mit mindestens zwei Lichtsendern und mindestens einem Lichtempfänger, wobei der Lichtempfänger eine einzige Photodiode aufweist, mit einer Steuer- und Auswerteeinheit zur Auswertung des Lichtempfängersignals des Lichtempfängers, mit einem Ausgang für ein Sensorsignal, welches von der Steuer- und Auswerteeinheit gebildet wird aufgrund des Lichtempfängersignals, wobei das Detektionsobjekt eine Beschriftung als Kennzeichnung aufweist, durch die Lichtsender ein Beleuchtungsfeld auf einen in Bewegungsrichtung schmalen Bereich der Kennzeichnung projiziert ist, und die Steuer- und Auswerteeinheit dazu ausgebildet ist, eine Empfangssignalfolge mit einer Vielzahl von Kontrastübergängen mit einer gespeicherten Empfangssignalfolge zu vergleichen und abhängig von dem Vergleichsergebnis das Sensorsignal ausgebbar ist, wobei die Lichtsender in einer Reihe angeordnet sind und eine Geometrie des Beleuchtungsfeldes durch eine Zu- oder Abschaltung von Lichtsendern angepasst werden kann, wobei die Breite des Beleuchtungsfelds eine Strukturgröße aufweist, die höchstens der Strukturgröße der Kennzeichnung entspricht und mindestens einer Punkt- oder Strichstärke der Kennzeichnung entspricht, wobei es sich bei der Strukturgröße der Kennzeichnung um die Breite oder Länge von Buchstaben, Zahlen oder Ziffern handelt, wobei eine Detektionsgenauigkeit, also der Grad der Übereinstimmung zwischen Empfangssignalfolge und einer gespeicherten Empfangssignalfolge eingestellt wird, wobei nach einem Einlernen einer Empfangssignalfolge eine Anpassung der Detektionsgenauigkeit über verschiedene Sensitivitätsstufen erfolgt.

Die Aufgabe wird weiter gemäß Anspruch 5 gelöst durch ein Verfahren zur Auswertung von Kennzeichnungen von Detektionsobjekten, mit mindestens zwei Lichtsendern und mindestens einem Lichtempfänger mit einer Steuer- und Auswerteeinheit zur Auswertung des Lichtempfängersignals des Lichtempfängers, mit einem Ausgang für ein Sensorsignal, welches von der Steuer- und Auswerteeinheit gebildet wird aufgrund des Lichtempfängersignals, wobei die Kennzeichnung eine Beschriftung aufweist, durch die Lichtsender ein längliches Beleuchtungsfeld auf einen in Bewegungsrichtung schmalen Bereich der Kennzeichnung projiziert wird, und die Steuer- und Auswerteeinheit eine Empfangssignalfolge mit einer Vielzahl von Kontrastübergängen mit einer gespeicherten Empfangssignalfolge vergleicht und abhängig von dem Vergleich das Sensorsignal ausgibt, wobei die Lichtsender in einer Reihe angeordnet sind und eine Geometrie des Beleuchtungsfeldes durch eine Zu- oder Abschaltung von Lichtsendern angepasst werden kann, wobei die Breite des Beleuchtungsfelds eine Strukturgröße aufweist, die höchstens der Strukturgröße der Kennzeichnung entspricht und mindestens einer Punkt- oder Strichstärke der Kennzeichnung entspricht, wobei es sich bei der Strukturgröße der Kennzeichnung um die Breite oder Länge von Buchstaben, Zahlen oder Ziffern handelt, wobei eine Detektionsgenauigkeit, also der Grad der Übereinstimmung zwischen Empfangssignalfolge und einer gespeicherten Empfangssignalfolge eingestellt wird, wobei nach einem Einlernen einer Empfangssignalfolge eine Anpassung der Detektionsgenauigkeit über verschiedene Sensitivitätsstufen erfolgt.

Bei dem Lichtempfänger handelt es sich um eine einzige Photodiode. Es liegt somit kein Array von Photodioden vor und damit auch keine Kamera, welche Bilder aufnimmt.

Gemäß der Erfindung wird ein Maß der Übereinstimmung zu eingelernten Merkmalen, Mustern bzw. Kontrastfolgen in einen Erkennungswert überführt und vergleichend bewertet. Gemäß der vorliegenden Erfindung wird also festgestellt, ob beispielsweise eine Beschriftung vorhanden ist oder nicht. Es kann sogar festgestellt werden, ob eine bestimmte Beschriftung, welche vorher eingelernt wurde vorhanden ist oder nicht, ohne dass der Sensor die Schrift lesen kann.

Bei der Kennzeichnung handelt es sich beispielsweise um eine Beschriftung mit einer Schrifthöhe von 3 bis 4 mm mit 1 bis 2 Zeilen mit bis zu ca. 20 Schriftzeichen der Schrift. Dabei ist gemäß der Erfindung eine Identifizierung einer einzigen Zeile der Beschriftung oder eines Teiles davon häufig ausreichend.

Durch den Sensor können beispielsweise folgende Fehlerquellen beim Druck detektiert werden: Eine Kartusche ist nicht eingesetzt; Der Toner ist leer; Unebene Oberflächen führen zu Verzerrungen bzw. zu Verwischungen der Kennzeichnung; Das Produkt hat eine zu kleine Oberfläche, wodurch der Druck nicht vollständig auf dem Objekt aufgebracht ist.

Gemäß der Erfindung ist ein kostengünstiger und schneller Sensor zur Anwesenheitserkennung gebildet. Es wird nicht der Inhalt der Beschriftung oder der Markierung gelesen. Insbesondere bei Objekten, welche beispielsweise gekrümmte Flächen aufweisen, oder bei denen Störlicht vorhanden ist oder insbesondere bei beengten Platzverhältnissen ist durch den erfindungsgemäßen Sensor eine bessere Erkennung möglich.

Für die Anwendung sind keine streng periodischen Muster erforderlich.

Das Einlernen geschieht beispielsweise über eine einfache Einlernfunktion, die im Nachhinein noch durch eine Sensitivitätseinstellung veränderbar ist, d.h. ohne dass der Sensor erneut eingelernt werden muss.

Das Ergebnis des Einlernprozesses wird optional mit einer Qualitätsangabe angezeigt.

Nach dem Einlernen erfolgt eine Anpassung der Detektionsgenauigkeit über verschiedene Sensitivitätsstufen. Die Sensitivitätseinstellung, beispielsweise in Stufen von 1 bis 9 steuert die Art der Auswertung. Bei höheren Stufen kommen ggf. andere Auswertealgorithmen zum Einsatz.

Ein 'Fingerabdruck' bzw. eine Repräsentation des Kontrastprofils wird durch Bestimmung verschiedener Parameter beim Einlernen festgelegt, welche in einem Detektionsfenster wieder erkannt werden.

In einem ersten Schritt wird beispielsweise in der Steuer- und Auswerteeinheit das Detektionsfenster festgelegt.

Bahngeschwindigkeiten der Detektionsobjekte betragen ca. 0,1 bis 4 Meter pro Sekunde, teilweise bis zu 10 Meter pro Sekunde bzw. bis zu 70 Kennzeichnungen pro Sekunde. Mit diesen Geschwindigkeiten wird die Kennzeichnung an dem Sensor vorbeibewegt, so dass die Kennzeichnung kontinuierlich von dem Beleuchtungsfeld beleuchtet wird und von dem Lichtempfänger erfasst wird und von der Steuer- und Auswerteeinheit ausgewertet werden kann.

Das längliche Beleuchtungsfeld wird quer zur Material- bzw. Objektbewegungsrichtung betrieben. Die Breite des Beleuchtungsfeldes gibt daher die Ausdehnung des Beleuchtungsfeldes in Material- bzw. Objektbewegungsrichtung an. Die Breite des Beleuchtungsfeldes ist bevorzugt kleiner als die Strukturgröße der Kennzeichnung. Die Objektbewegungsrichtung erfolgt für gewöhnlich in einer Richtung, d.h. eindimensional.

Der Sensor ist dabei nur in einem vorgegebenen, zusammenhängenden und lokalen Detektionsfenster entlang des Materials oder Objekts aktiv.

Prinzipiell wird während des Einlernens ein Signalverlauf als Sammlung einzelner abstrakter Datenpunkte bzw. als Empfangssignalfolge abgespeichert. Diese Datenpunkte beschreiben Änderungen im Helligkeitsverlauf und beinhalten Informationen zu Kontrast und Zeitstempel in einem Einlernfenster bzw. Detektionsfenster.

Im Detektionsbetrieb erfolgt abermals die Aufnahme signifikanter Helligkeitsschwankungen im Detektionsfenster als Empfangssignalfolge. Diese werden wiederum zumindest temporär zur Weiterverarbeitung zwischengespeichert oder abgespeichert.

Nach einer Aufnahme am Ende des Detektionsfensters erfolgt eine Vorverarbeitung und Verarbeitung der Signalpunkte bzw. der Empfangssignalfolgen und eine Bewertung anhand von Vergleichskriterien.

Bei der Verarbeitung erfolgt ein Auffinden von Übereinstimmungen durch Vergleich der Empfangssignalfolge im Detektionsfenster mit der beim Einlernvorgang gespeicherten Empfangssignalfolge der Kennzeichnung.

Der Vergleich erfolgt beispielsweise anhand von mehreren verschiedenen Charakteristika der Signalpunkte bzw. der Empfangssignalfolge.

Ein Charakteristikum bildet der Kontrast, nämlich die relative Kontraständerung des Empfangssignals der Kennzeichnung.

Ein weiteres Charakteristikum bildet ein Zeitstempel, nämlich der Zeitpunkt einer Kontraständerung im Detektionsfenster in Leserichtung. Um unempfindlich gegenüber Verschiebungen der gesamten Bedruckung innerhalb des Lesefensters zu sein, wird der Zeitstempel relativ in Bezug zu benachbarten Kontraständerungen ausgewertet.

Für die Bewertung des Vergleichsergebnisses werden nun abhängig von der vom Nutzer gewählten Sensitivitätsstufe verschiedene Kriterien herangezogen.

Auf der gröbsten Sensitivitätsstufe ist lediglich die Zählung der Kontrastübergänge der Empfangssignalfolge auf der Messsequenz vorgesehen und ein Vergleich mit der Anzahl der Teach-Kontrastübergänge der gespeicherten Empfangssignalfolge.

Auf den Sensitivitätsstufen im mittleren Bereich werden neben den vorher bewerteten Kriterien ebenfalls die Resultate der Zuordnung der Punkte bei einer Überprüfung der Übereinstimmung verglichen.

Auf den feinsten Senstivitätsstufen werden abermals die Kontrastübergänge im Detail beleuchtet.

Der Sensor ist daher in der Lage die Ähnlichkeit einer Kennzeichnung bzw. Bedruckung zu einer eingelernten Referenz zu bewerten. Eine von dieser Referenz unabhängige Aussage über Inhalt oder Lesbarkeit einer Bedruckung wird nicht realisiert. Dies ist ein wesentlicher Unterschied zu den Möglichkeiten bildbasierter Systeme.

Gemäß der Erfindung sollten die Merkmale grundsätzlich geschwindigkeitsunabhängig sein. Für eine hohe Detailtreue bei feiner Auflösung d. h. bei hoher Empfindlichkeit, können jedoch zeitbasierte Merkmale unter Annahme konstanter Geschwindigkeit im Detektionsfenster berücksichtigt werden.

Eine Einstellung des Sensors, beispielsweise der Sensitivität, erfolgt beispielsweise über ein Bedienfeld mit einer Anzeige, über eine Einstellungsleitung und ein Einstellungswerkzeug, beispielsweise ein Personalcomputer oder ähnliches oder über eine Kommunikationsschnittstelle, z.B. IO-Link.

Gemäß der Erfindung sind mindestens zwei Lichtsender in einer Reihe angeordnet. Besonders bevorzugt sind mindestens drei Lichtsender in einer Reihe angeordnet. Die Anpassung des Beleuchtungsfeldes erfolgt durch eine Zuschaltung oder Abschaltung der Lichtsender. Es kann aber auch vorgesehen sein, durch eine verstellbare variable Blende vor dem Sender eine Anpassung des Beleuchtungsfeldes vorzunehmen.

Es handelt sich dabei beispielsweise um eine segmentierte LED-Struktur aus 3 weißen LEDs in Chip-Bauform. Diese LEDs werden durch die Steuer- und Auswerteeinheit so angesteuert, dass unterschiedlich große Beleuchtungsfelder dargestellt werden, wodurch unterschiedlich große Integrationsbereiche gebildet werden. Die Lichtsender bzw. LED's sind dabei bevorzugt besonders nah zueinander angeordnet. Es ist auch denkbar, durch ein optisches Element die Abstrahlcharakteristik der 3 LED's zu vermischen.

Die Modularität der Beleuchtungsfeldgröße erlaubt eine bessere Anpassung an die jeweilige Anwendung.

Optional ist der Lichtsender oder die Lichtsender durch eine RGB-Leuchtdiode gebildet, wodurch die einzelnen Grundfarben unabhängig voneinander erzeugt werden können, wodurch beliebige Leuchtfarben herstellbar sind. Dadurch kann die Beleuchtungsfarbe direkt an die Kennzeichnung angepasst werden, insbesondere, um den Kontrast im Empfangssignal zu erhöhen.

Gemäß der Erfindung weist die Breite des Beleuchtungsfeldes (8) eine Strukturgröße auf, die höchstens der Strukturgröße der Kennzeichnung entspricht und mindestens einer Punkt- oder Strichstärke der Kennzeichnung entspricht.

Bei der Strukturgröße der Kennzeichnung handelt es sich um die Breite oder Länge von Buchstaben, Zahlen oder Ziffern.

Die Punkt- oder Strichstärke der Kennzeichnung wird beispielsweise durch die Auflösung des Druckers der Kennzeichnung bestimmt, also beispielsweise die Punktgröße bei einer Datamatrix oder die Strichstärke bei einer Buchstaben-, Zahlen- oder Ziffernkennzeichnung.
In Weiterbildung der Erfindung beträgt die Breite des Beleuchtungsfeldes bzw. Lichtflecks ca. 0,6 mm und die Höhe des Beleuchtungsfelds bzw. Lichtflecks beträgt ca. 6 mm bei einer Tastweite von ca. 13 mm. In einem weiteren optischen System mit Tastweite 25 mm ist die Lichtfleckgröße entsprechend größer. Der größere Lichtfleck lässt sich insbesondere bei gröberen Strukturen einsetzten.

Die Breite, vorzugsweise in Vorschubrichtung des Materials des Beleuchtungsfeldes, ist vorzugsweise auf 0,6 mm reduziert, um typische Strukturgrößen von Dot-Matrix Bedruckungen mit Punktgrößen 0,3 bis 0,4 mm abbilden zu können.

Die geeignete Höhe des Beleuchtungsfelds ist sowohl von der Höhe der Kennzeichnung bzw. der Bedruckung als auch von den Prozessschwankungen, beispielsweise dem Lateralversatz des Materials abhängig.

Jedoch können auch höhere Tastweiten von beispielsweise 25 mm vorgesehen sein mit größeren Beleuchtungsfeldern.

Gemäß der Erfindung ist eine Detektionsgenauigkeit, also der Grad der Übereinstimmung zwischen Empfangssignalfolge und einer gespeicherten Empfangssignalfolge, einstellbar. Dadurch kann der gewünschte Erkennungsgrad bzw. die gewünschte Erkennungstoleranz individuell eingestellt werden.

In Weiterbildung der Erfindung wird ein Hintergrundsignal gespeichert.

Dabei wird in einem ersten Einlernvorgang beispielsweise der Hintergrund eingelernt und in einem zweiten Einlernvorgang die Kennzeichnung zusammen mit dem Hintergrund eingelernt. Dadurch kann durch die Steuer-und Auswerteeinheit beispielsweise durch Abzug des Hintergrundes die reine Beschriftung isoliert werden, wodurch die Beschriftung auch bei veränderlichem Hintergrund noch identifizierbar ist.

Die Speicherung der Signalverläufe erfolgt separat für das Hintergrund-Einlernfenster, als auch für das Einlernen der Beschriftung.

Bei einer Vorverarbeitung erfolgt die Ausblendung des während des Einlernens erfassten Hintergrunds gegenüber dem Messsignal. Hierfür werden die beim Einlernen gemessenen Kontrastschwankungen möglichst ähnlichen Schwankungen bei der Detektion zugeordnet und die Signalpunkte für die spätere Verarbeitung deaktiviert.

In Weiterbildung der Erfindung ist die Steuer- und Auswerteeinheit dazu ausgebildet, aus der Kennzeichnung mindestens einen Starttrigger zu bestimmen, wobei die Empfangssignalfolge ab dem Starttrigger für eine konstante Zeitspanne auswertbar ist.

Es kann auch alternativ vorgesehen sein, dass die Steuer- und Auswerteeinheit dazu ausgebildet ist, aus einem Eingangssignal mindestens einen Starttrigger zu bestimmen, wobei die Empfangssignalfolge ab dem Starttrigger für eine konstante Zeitspanne ausgewertet wird.

Weiter kann es auch alternativ vorgesehen sein, dass die Steuer- und Auswerteeinheit dazu ausgebildet ist, aus einem Eingangssignal mindestens einen Start- und einen Endtrigger zu bestimmen, wobei die Empfangssignalfolge zwischen aufeinanderfolgenden Start- und Endtriggern ausgewertet wird.

Der Trigger wird beispielsweise von einer externen Steuerung im Prozess direkt vorgegeben und an mindestens einem Eingang des Sensors bereitgestellt. Die Steuer- und Auswerteeinheit wertet den Trigger aus.

Alternativ kann an einem Eingang des Sensors eine externe Positionsinformation zugeführt werden, beispielsweise von einer externen Steuerung oder einem Drehgeber.
Die Steuer- und Auswerteeinheit kann dazu ausgebildet sein, aus der Positionsinformation einen Start- und einen Endtrigger zu bestimmen, wobei die Empfangssignalfolge zwischen aufeinanderfolgenden Start- und Endtriggern ausgewertet wird, so dass das Detektionsfenster über eine Wegstrecke vorgegeben wird.

Das Detektionsfenster stimmt folglich mit dem zu überwachenden Kennzeichnungsbereich bzw. Bedruckungsbereich überein.

Weiter kann es vorgesehen sein, einen Starttrigger und einen Endtrigger aus der Kennzeichnung bzw. Beschriftung abzuleiten. Neben einer Zeitüberwachung zwischen Starttrigger und Endtrigger ist bevorzugt eine Wegüberwachung vorgesehen, wobei festgestellt wird, ob alle Merkmale der Kennzeichnung zwischen Starttrigger und Endtrigger vorhanden sind. Dadurch kann der Sensor auch bei unterschiedlichen Geschwindigkeiten eingesetzt werden.

In Weiterbildung der Erfindung sind mehrere Empfangsdioden in einer Zeile angeordnet.

Hierdurch ist das Kontrastprofil mit mehreren Empfangsdioden in Längsrichtung zum Erkennen besser geeignet. Hierdurch kann ein größerer Bereich ortsaufgelöst detektiert werden.

Die Erfindung wird nachstehend auch hinsichtlich weiterer Vorteile und Merkmale unter Bezugnahme auf die beigefügte Zeichnung anhand von Ausführungsbeispielen erläutert. Die Figur der Zeichnung zeigt in:
- Figur 1: einen Kontrastsensor;
- Figur 2 bis Figur 5: jeweils eine Kennzeichnung auf einem Objekt bzw. Gegenstand;
- Figur 6: eine Kennzeichnung beim Einlernen und bei einer Detektion;
- Figur 7: eine Kennzeichnung bzw. Beschriftung;
- Figur 8: eine erste Schwelle und ein Kontrastsignal;
- Figur 9: eine zweite Schwelle und ein Kontrastsignal.

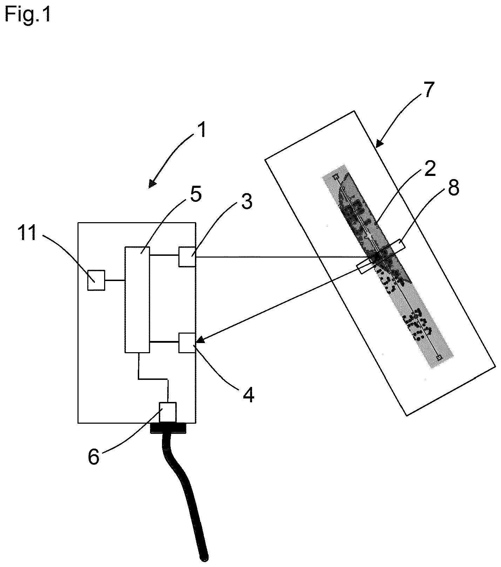

Figur 1 zeigt einen Kontrastsensor 1 zur Auswertung einer Kennzeichnung 2 von Detektionsobjekten 7, mit mindestens einem Lichtsender 3 und mindestens einem Lichtempfänger 4, wobei der Lichtempfänger 4 eine einzige Photodiode aufweist, mit einer Steuer- und Auswerteeinheit 5 zur Auswertung des Lichtempfängersignals des Lichtempfängers 4, mit einem Ausgang 6 für ein Sensorsignal, welches von der Steuer- und Auswerteeinheit 5 gebildet wird aufgrund des Lichtempfängersignals, wobei die Kennzeichnung 2 eine Beschriftung oder Markierung aufweist, durch den mindestens einen Lichtsender 3 ein längliches Beleuchtungsfeld 8 auf mindestens einem Teil der Kennzeichnung 2 projiziert ist, und die Steuer- und Auswerteeinheit 5 dazu ausgebildet ist, eine Empfangssignalfolge mit einer Vielzahl von Kontrastübergängen mit einer gespeicherten Empfangssignalfolge zu vergleichen und abhängig von dem Vergleich das Sensorsignal ausgebbar ist.

Der Kontrastsensor 1 ist beispielsweise an einer Druckmaschine, einer Verpackungsmaschine, einer Verarbeitungsmaschine für Produkte usw. angeordnet.

Der Lichtsender 3 ist beispielsweise durch eine oder mehrere Leuchtdioden oder Laserdioden gebildet. Der Lichtempfänger 4 ist beispielsweise durch eine oder mehrere Photodioden gebildet. Der Kontrastsensor 1 kann beispielsweise als Lichttaster ausgebildet sein, wonach der Lichtsender 3 und der Lichtempfänger 4 in einem gemeinsamen Gehäuse angeordnet sind, in dem auch die Steuer- und Auswerteeinheit 5 angeordnet ist.

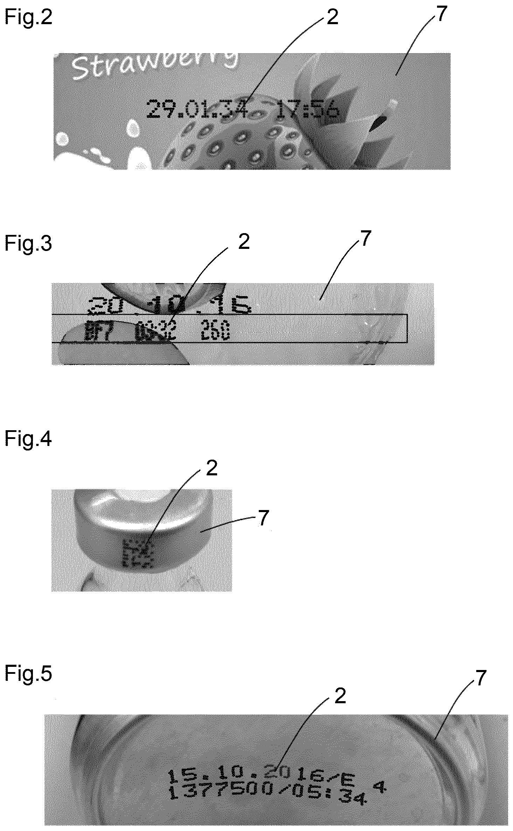

Figur 2 bis Figur 5 zeigt verschiedene Kennzeichnungen 2 auf verschiedenen Objekten bzw. Detektionsobjekten 7.

Figur 2 zeigt eine Kennzeichnung 2 mit einer einzeiligen Datumsangabe und einer Uhrzeit, welche beispielsweise auf einer Getränkeverpackung mit einem Bild als Hintergrund aufgedruckt ist.

Figur 3 zeigt eine Kennzeichnung 2 mit einer zweizeiligen Beschriftung, beispielsweise eine Datumsangabe in einer ersten Zeile und eine zusätzliche Beschriftung in einer zweiten Zeile mit beispielsweise einer Seriennummer. Im Hintergrund befinden sich ebenfalls Bildelemente, beispielsweise ein Dekor eines Joghurtdeckels.

Figur 4 zeigt einen Verschluss einer Flasche mit einem zweidimensionalen Punktcode bzw. einem DataMatrix-Code als Kennzeichnung 2. Die Kennzeichnung 2 ist dabei nach außen gekrümmt und auf einem teilweise glänzenden Hintergrund angeordnet.

Figur 5 zeigt wiederum eine Kennzeichnung 2 mit einer zweizeiligen Beschriftung, beispielsweise eine Datumsangabe in einer ersten Zeile und eine zusätzliche Beschriftung in einer zweiten Zeile mit beispielsweise einer Seriennummer. Die Kennzeichnung 2 ist dabei nach innen gekrümmt und befindet sich beispielsweise auf einem Boden einer Aluminiumgetränkedose, so dass der Hintergrund teilweise glänzend ist.

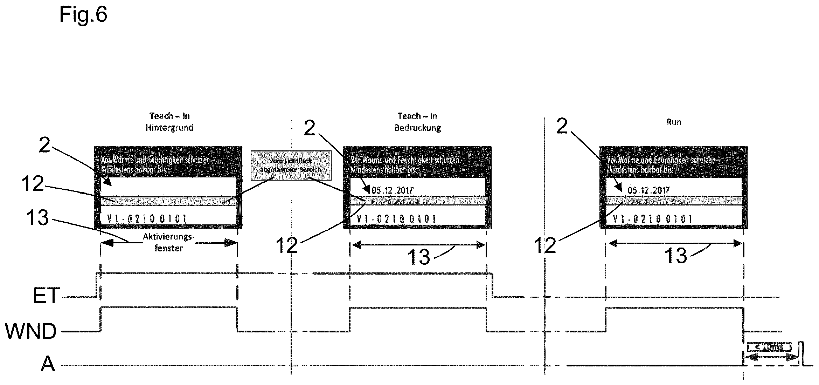

Figur 6 zeigt eine erste Kennzeichnung 2 ohne abzutastende Beschriftung, welche dazu benutzt wird in einem ersten Einlernschritt einen Hintergrund einzulernen. Der Bereich 12 wird von dem Beleuchtungsfeld kontinuierlich während des Detektionsfensters 13 abgetastet.

Weiter zeigt Figur 6 eine zweite Kennzeichnung 2 mit einer abzutastenden Beschriftung, welche dazu benutzt wird, in einem zweiten Einlernschritt die Beschriftung zusammen mit dem Hintergrund einzulernen. Der Bereich 12 wird wiederum kontinuierlich durch das Beleuchtungsfeld beleuchtet und während des Detektionsfensters durch den Lichtempfänger und die Steuer- und Auswerteeinheit abgetastet.

Weiter zeigt Figur 6 die zweite Kennzeichnung 2 mit der abzutastenden Beschriftung, um die Beschriftung der Kennzeichnung zu erfassen und zu analysieren, ob die Kennzeichnung vorhanden ist oder nicht.

In Figur 6 ist ein erstes Eingangssignal ET und ein zweites Eingangssignal WND, bezeichnend für Window/Fenster dargestellt. Das Erste Eingangssignal ET steht für Einlernen/Teachen und gibt an, dass der Sensor die detektierte Kennzeichnung 2 einlernen soll. Das zweite Eingangssignal WND gibt an, wann das Detektionsfenster 13 aktiviert werden soll und wann nicht. Weiter ist ein Ausgabesignal A angegeben, welches eine gültig detektierte Kennzeichnung 2 anzeigt, wobei das Ausgabesignal beispielsweise innerhalb von 10 ms nach erfolgter Detektion ausgegeben wird.

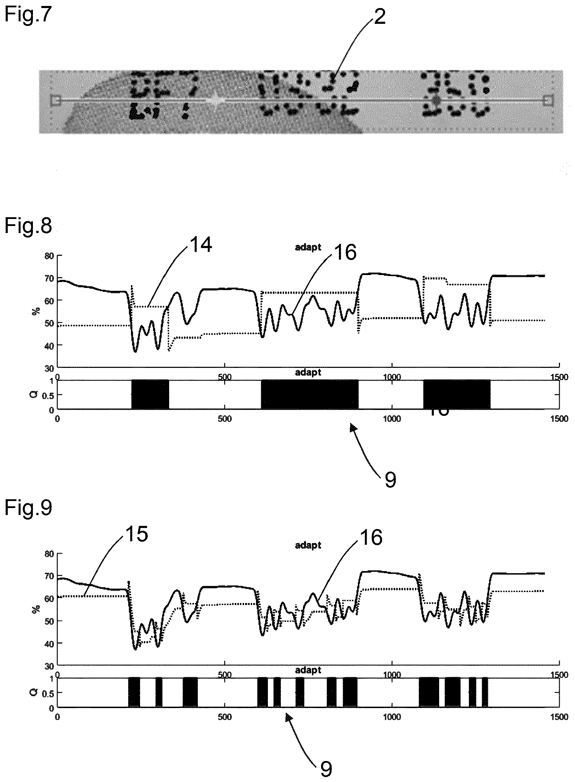

Figur 7 zeigt eine weitere Kennzeichnung 2 mit einer Beschriftung und einem Hintergrund, wobei die von dem Kontrastsensor erfassten Signale in Figur 8 und Figur 9 dargestellt sind.

Figur 8 zeigt ein Abtastsignal bzw. Kontrastsignal bzw. Lichtempfängersignal 16, das mit einer ersten Schwelle 14 verglichen wird. Bei der ersten Schwelle 14 handelt es sich um eine von der Steuer- und Auswerteeinheit automatisch nachgeführten Schwelle. Daraus ergibt sich ein Ergebnissignal mit den erkannten Merkmalen als binäres Signal bzw. die Empfangssignalfolge 9.

Figur 9 zeigt ein Abtastsignal bzw. Kontrastsignal bzw. Lichtempfängersignal 16, das mit einer zweiten empfindlicheren Schwelle 15 verglichen wird. Bei der zweiten Schwelle 15 handelt es sich ebenfalls um eine von der Steuer- und Auswerteeinheit automatisch nachgeführten Schwelle. Daraus ergibt sich ein Ergebnissignal mit den erkannten Merkmalen als binäres Signal bzw. die Empfangssignalfolge 9, wobei mehr Merkmale erkannt wurden als bei dem Beispiel gemäß Figur 8.

### Bezugszeichen:

- 1: Kontrastsensor
- 2: Kennzeichnung
- 3: Lichtsender
- 4: Lichtempfänger
- 5: Steuer- und Auswerteeinheit
- 6: Ausgang
- 7: Detektionsobjekt
- 8: längliches Beleuchtungsfeld
- 9: Empfangssignalfolge
- 10: Kontrastübergänge
- 11: Speicher
- 12: Bereich
- 13: Detektionsfenster
- 14: erste Schwelle
- 15: zweite Schwelle
- 16: Lichtempfangssignal

## Patentansprüche

1. Kontrastsensor (1) und Detektionsobjekt (7) mit einer Kennzeichnung (2), wobei der Kontrastsensor (1) zur Auswertung von den Kennzeichnungen (2) auf den Detektionsobjekten (7) ausgebildet ist,
mit mindestens zwei Lichtsendern (3) und mindestens einem Lichtempfänger (4), wobei der Lichtempfänger eine einzige Photodiode aufweist,
mit einer Steuer- und Auswerteeinheit (5) zur Auswertung des Lichtempfängersignals des Lichtempfängers (4),
mit einem Ausgang (6) für ein Sensorsignal, welches von der Steuer- und Auswerteeinheit (5) gebildet wird aufgrund des Lichtempfängersignals (16),
wobei
das Detektionsobjekt (7) eine Beschriftung als Kennzeichnung (2) aufweist, durch die Lichtsender (3) ein Beleuchtungsfeld (8) auf einen in Bewegungsrichtung schmalen Bereich der Kennzeichnung (2) projiziert ist,
und die Steuer- und Auswerteeinheit (5) dazu ausgebildet ist, eine Empfangssignalfolge (9) mit einer Vielzahl von Kontrastübergängen (10) mit einer gespeicherten Empfangssignalfolge zu vergleichen und abhängig von dem Vergleichsergebnis das Sensorsignal ausgebbar ist, wobei die Lichtsender (3) in einer Reihe angeordnet sind und eine Geometrie des Beleuchtungsfeldes (8) durch eine Zu- oder Abschaltung von Lichtsendern (3) angepasst werden kann, **dadurch gekennzeichnet, dass** die Breite des Beleuchtungsfelds (8) eine Strukturgröße aufweist, die höchstens der Strukturgröße der Kennzeichnung entspricht und mindestens einer Punkt- oder Strichstärke der Kennzeichnung entspricht, wobei es sich bei der Strukturgröße der Kennzeichnung um die Breite oder Länge von Buchstaben, Zahlen oder Ziffern handelt, wobei eine Detektionsgenauigkeit, also der Grad der Übereinstimmung zwischen Empfangssignalfolge und einer gespeicherten Empfangssignalfolge eingestellt wird, wobei nach einem Einlernen einer Empfangssignalfolge eine Anpassung der Detektionsgenauigkeit über verschiedene Sensitivitätsstufen erfolgt.

2. Kontrastsensor (1) nach Anspruch 1, **dadurch gekennzeichnet, dass** mindestens drei Lichtsender (3) in einer Reihe angeordnet sind, so dass eine Geometrie des Beleuchtungsfeldes durch eine Zu- oder Abschaltung von Lichtsendern (3) angepasst werden kann.

3. Kontrastsensor (1) nach mindestens einem der vorhergehenden Ansprüche, **dadurch gekennzeichnet, dass** ein Hintergrundsignal gespeichert ist.

4. Kontrastsensor nach mindestens einem der vorhergehenden Ansprüche,
**dadurch gekennzeichnet, dass** die Steuer- und Auswerteeinheit (5) dazu ausgebildet ist, aus der Kennzeichnung (2) mindestens einen Starttrigger zu bestimmen, wobei die Empfangssignalfolge (9) ab dem Starttrigger für eine konstante Zeitspanne auswertbar ist oder die Steuer- und Auswerteeinheit (5) dazu ausgebildet ist, aus einem Eingangssignal mindestens einen Starttrigger zu bestimmen, wobei die Empfangssignalfolge (9) ab dem Starttrigger für eine konstante Zeitspanne ausgewertet wird oder die Steuer- und Auswerteeinheit (5) dazu ausgebildet ist, aus einem Eingangssignal mindestens einen Start- und einen Endtrigger zu bestimmen, wobei die Empfangssignalfolge (9) zwischen aufeinanderfolgenden Start- und Endtriggern ausgewertet wird.

5. Verfahren zur Auswertung von Kennzeichnungen (2) von Detektionsobjekten (7),
mit mindestens zwei Lichtsendern (3) und mindestens einem Lichtempfänger (4)
mit einer Steuer- und Auswerteeinheit (5) zur Auswertung des Lichtempfängersignals des Lichtempfängers (4),
mit einem Ausgang (6) für ein Sensorsignal, welches von der Steuer- und Auswerteeinheit (5) gebildet wird aufgrund des Lichtempfängersignals (16), wobei
die Kennzeichnung (2) eine Beschriftung aufweist,
durch die Lichtsender (3) ein längliches Beleuchtungsfeld (8) auf einen in Bewegungsrichtung schmalen Bereich der Kennzeichnung (2) projiziert wird,
und die Steuer- und Auswerteeinheit (5) eine Empfangssignalfolge (9) mit einer Vielzahl von Kontrastübergängen (10) mit einer gespeicherten Empfangssignalfolge vergleicht und abhängig von dem Vergleich das Sensorsignal ausgibt, wobei die Lichtsender (3) in einer Reihe angeordnet sind und eine Geometrie des Beleuchtungsfeldes (8) durch eine Zu- oder Abschaltung von Lichtsendern (3) angepasst werden kann, **dadurch gekennzeichnet, dass** die Breite des Beleuchtungsfelds (8) eine Strukturgröße aufweist, die höchstens der Strukturgröße der Kennzeichnung entspricht und mindestens einer Punkt- oder Strichstärke der Kennzeichnung entspricht, wobei es sich bei der Strukturgröße der Kennzeichnung um die Breite oder Länge von Buchstaben, Zahlen oder Ziffern handelt, wobei eine Detektionsgenauigkeit, also der Grad der Übereinstimmung zwischen Empfangssignalfolge und einer gespeicherten Empfangssignalfolge eingestellt wird, wobei nach einem Einlernen einer Empfangssignalfolge eine Anpassung der Detektionsgenauigkeit über verschiedene Sensitivitätsstufen erfolgt.

6. Verfahren nach Anspruch 5, **dadurch gekennzeichnet, dass** ein Hintergrundsignal gespeichert wird.

7. Verfahren nach mindestens einem der vorhergehenden Ansprüche 5 bis 6,
**dadurch gekennzeichnet, dass** aus der Kennzeichnung (2) mindestens ein Starttrigger bestimmt wird, wobei die Empfangssignalfolge (9) ab dem Starttrigger für eine konstante Zeitspanne ausgewertet wird oder aus einem Eingangssignal mindestens ein Starttrigger bestimmt wird, wobei die Empfangssignalfolge (9) ab dem Starttrigger für eine konstante Zeitspanne ausgewertet wird oder aus einem Eingangssignal mindestens ein Start- und ein Endtrigger bestimmt wird, wobei die Empfangssignalfolge (9) zwischen aufeinanderfolgenden Start- und Endtriggern ausgewertet wird.

## Claims

1. A contrast sensor (1) and a detection object (7) having an identification marking (2), wherein the contrast sensor (1) is configured for evaluating identification markings (2) on the detection objects (7),
having at least two light transmitters (3) and at least one light receiver (4), wherein the light receiver has a single photodiode;
having a control and evaluation unit (5) for evaluating the light receiver signal of the light receiver (4); and
having an output (6) for a sensor signal that is formed by the control and evaluation unit (5) on the basis of the light receiver signal (16),
wherein
the detection object (2) has lettering as the identification marking (2);
an illumination field (8) is projected by the light transmitter (3) onto a region of the identification marking (2) narrow in the direction of movement;
and the control and evaluation unit (5) is configured to compare a reception signal sequence (9) having a plurality of contrast transitions (10) with a stored reception signal sequence and the sensor signal can be output in dependence on the comparison result; wherein
the light transmitters (3) are arranged in a row and a geometry of the illumination field (8) can be adapted by a switching in or out of light transmitters (3)
**characterized in that** the width of the illumination field (8) has a structural size that at most corresponds to the structural size of the identification marking and at least corresponds to a dot or line thickness of the identification marking, with the structural size of the marking being the width or length of letters, numbers, or digits, with a detection accuracy, that is the degree of agreement between the reception signal sequence and a stored reception signal sequence, being set, and with an adaptation of the detection accuracy taking place over different sensitivity stages after a teaching of a reception signal sequence.

2. A contrast sensor (1) in accordance with claim 1, **characterized in that** at least three light transmitters (3) are arranged in a row so that a geometry of the illumination field can be adapted by a switching in or out of light transmitters (3).

3. A contrast sensor (1) in accordance with at least one of the preceding claims, **characterized in that** a background signal is stored.

4. A contrast sensor in accordance with at least one of the preceding claims, **characterized in that** the control and evaluation unit (5) is configured to determine at least one start trigger from the identification marking (2), with the reception signal sequence (9) being able to be evaluated for a constant time period from the start trigger onward; or **in that** the control and evaluation unit (5) is configured to determine at least one start trigger from an input signal, with the reception signal sequence (9) being evaluated for a constant time period from the start trigger onward; or **in that** the control and evaluation unit (5) is configured to determine at least one start trigger and one end trigger from an input signal, with the reception signal sequence (9) between sequential start and end triggers being evaluated.

5. A method of evaluating identification markings (2) of detection objects (7), having at least two light transmitters (3) and at least one light receiver (4); having a control and evaluation unit (5) for evaluating the light receiver signal of the light receiver (4), and
having an output (6) for a sensor signal that is formed by the control and evaluation unit (5) on the basis of the light receiver signal (16),
wherein
the identification marking (2) has lettering;
an elongate illumination field (8) is projected by the light transmitter (3) onto a region of the identification marking (2) narrow in the direction of movement;
and the control and evaluation unit (5) compares a reception signal sequence (9) having a plurality of contrast transitions (10) with a stored reception signal sequence and outputs the sensor signal in dependence on the comparison, and wherein the light transmitters (3) are arranged in a row and a geometry of the illumination field (8) can be adapted by a switching in or out of light transmitters (3), **characterized in that** the width of the illumination field (8) has a structural size that at most corresponds to the structural size of the identification marking and at least corresponds to a dot or line thickness of the identification marking, with the structural size of the marking being the width or length of letters, numbers, or digits, with a detection accuracy, that is the degree of agreement between the reception signal sequence and a stored reception signal sequence, being set, and with an adaptation of the detection accuracy taking place over different sensitivity stages after a teaching of a reception signal sequence.

6. A method in accordance with claim 5, **characterized in that** a background signal is stored.

7. A method in accordance with at least one of the preceding claims 5 to 6, **characterized in that** at least one start trigger is determined from the identification marking (2), with the reception signal sequence (9) being evaluated for a constant time period from the start trigger onward; or **in that** at least one start trigger is determined from an input signal, with the reception signal sequence (9) being evaluated for a constant time period from the start trigger onward; or **in that** at least one start trigger and one end trigger is determined from an input signal, with the reception signal sequence (9) between successive start and end triggers being evaluated.

## Revendications

1. Capteur de contraste (1) et objet de détection (7) ayant une identification (2), le capteur de contraste (1) étant réalisé pour évaluer les identifications (2) sur les objets de détection (7),
comprenant au moins deux émetteurs de lumière (3) et au moins un récepteur de lumière (4), le récepteur de lumière présentant une seule photodiode,
une unité de commande et d'évaluation (5) pour évaluer le signal de réception de lumière du récepteur de lumière (4),
une sortie (6) pour un signal de capteur qui est formé par l'unité de commande et d'évaluation (5) sur la base du signal de réception de lumière (16),
dans lequel
l'objet de détection (7) présente une inscription à titre d'identification (2), un champ d'éclairage (8) est projeté sur une zone, étroite en direction de mouvement, de l'identification (2) par les émetteurs de lumière (3),
et l'unité de commande et d'évaluation (5) est réalisée pour comparer une séquence de signaux de réception (9) ayant une multitude de transitions de contraste (10) avec une séquence de signaux de réception mémorisée, et le signal de capteur peut être émis en fonction du résultat de la comparaison, les émetteurs de lumière (3) sont disposés en une rangée et une géométrie du champ d'éclairage (8) peut être adaptée par une mise en circuit ou une coupure d'émetteurs de lumière (3),
**caractérisé en ce que**
la largeur du champ d'éclairage (8) présente une taille structurelle qui correspond au maximum à la taille structurelle de l'identification et qui correspond au moins à une épaisseur de point ou de barre de l'identification, la taille structurelle de l'identification étant la largeur ou la longueur de lettres, de nombres ou de chiffres, une précision de détection, c'est-à-dire le degré de coïncidence entre une séquence de signaux de réception et une séquence de signaux de réception mémorisée, est réglée, et une adaptation de la précision de détection a lieu après un apprentissage d'une séquence de signaux de réception par le biais de différents niveaux de sensibilité.

2. Capteur de contraste (1) selon la revendication 1, **caractérisé en ce que** au moins trois émetteurs de lumière (3) sont disposés en une rangée, de telle sorte qu'une géométrie du champ d'éclairage puisse être adaptée par une mise en circuit ou une coupure d'émetteurs de lumière (3).

3. Capteur de contraste (1) selon l'une au moins des revendications précédentes, **caractérisé en ce que** un signal d'arrière-plan est mémorisé.

4. Capteur de contraste selon l'une au moins des revendications précédentes, **caractérisé en ce que** l'unité de commande et d'évaluation (5) est réalisée pour déterminer au moins un déclencheur de départ à partir de l'identification (2), la séquence de signaux de réception (9) pouvant être évaluée pendant une période de temps constante à partir du déclencheur de départ, ou l'unité de commande et d'évaluation (5) est réalisée pour déterminer au moins un déclencheur de départ à partir d'un signal d'entrée, la séquence de signaux de réception (9) étant évaluée pendant une période de temps constante à partir du déclencheur de départ, ou l'unité de commande et d'évaluation (5) est réalisée pour déterminer au moins un déclencheur de départ et un déclencheur de fin à partir d'un signal d'entrée, la séquence de signaux de réception (9) étant évaluée entre des déclencheurs de départ et de fin successifs.

5. Procédé d'évaluation d'identifications (2) d'objets de détection (7), comprenant au moins deux émetteurs de lumière (3) et au moins un récepteur de lumière (4),
une unité de commande et d'évaluation (5) pour évaluer le signal de réception de lumière du récepteur de lumière (4),
une sortie (6) pour un signal de capteur qui est formé par l'unité de commande et d'évaluation (5) sur la base du signal de réception de lumière (16) dans lequel
l'identification (2) présente une inscription,
un champ d'éclairage oblong (8) est projeté sur une zone, étroite en direction de mouvement, de l'identification (2) par les émetteurs de lumière (3), et
l'unité de commande et d'évaluation (5) compare une séquence de signaux de réception (9) ayant une multitude de transitions de contraste (10) avec une séquence de signaux de réception mémorisée et émet le signal de capteur en fonction du résultat, les émetteurs de lumière (3) sont disposés en une rangée et une géométrie du champ d'éclairage (8) peut être adaptée par une mise en circuit ou une coupure d'émetteurs de lumière (3), **caractérisé en ce que**
la largeur du champ d'éclairage (8) présente une taille structurelle qui correspond au maximum à la taille structurelle de l'identification et qui correspond au moins à une épaisseur de point ou de barre de l'identification, la taille structurelle de l'identification étant la largeur ou la longueur de lettres, de nombres ou de chiffres, une précision de détection, c'est-à-dire le degré de coïncidence entre une séquence de signaux de réception et une séquence de signaux de réception mémorisée, est réglée, et une adaptation de la précision de détection a lieu après un apprentissage d'une séquence de signaux de réception par le biais de différents niveaux de sensibilité.

6. Procédé selon la revendication 5, **caractérisé en ce que** un signal d'arrière-plan est mémorisé.

7. Procédé selon l'une au moins des revendications précédentes 5 à 6, **caractérisé en ce que** au moins un déclencheur de départ est déterminé à partir de l'identification (2), la séquence de signaux de réception (9) étant évaluée pendant une période de temps constante à partir du déclencheur de départ, ou au moins un déclencheur de départ est déterminé à partir d'un signal d'entrée, la séquence de signaux de réception (9) étant évaluée pendant une période de temps constante à partir du déclencheur de départ, ou
au moins un déclencheur de départ et un déclencheur de fin sont déterminés à partir d'un signal d'entrée, la séquence de signaux de réception (9) étant évaluée entre des déclencheurs de départ et de fin successifs.
